Europäisches Patentamt

European Patent Office

Office européen des brevets

(19)

(11) Veröffentlichungsnummer: **0 134 827**
**A1**

# EUROPÄISCHE PATENTANMELDUNG

(12)

(21) Anmeldenummer: **83108881.0**

(22) Anmeldetag: **08.09.83**

(51) Int. Cl.⁴: **H 02 K 41/03**
**H 02 K 37/00**

(43) Veröffentlichungstag der Anmeldung:
**27.03.85 Patentblatt 85/13**

(84) Benannte Vertragsstaaten:
**DE FR GB IT**

(71) Anmelder: **IBM DEUTSCHLAND GMBH**
**Pascalstrasse 100**
**D-7000 Stuttgart 80(DE)**

(84) Benannte Vertragsstaaten:
**DE**

(71) Anmelder: **International Business Machines**
**Corporation**
**Old Orchard Road**
**Armonk, N.Y. 10504(US)**

(84) Benannte Vertragsstaaten:
**FR GB IT**

(72) Erfinder: **Bogh, Armin, Dipl.-Phys.**
**Mozartstrasse 13**
**D-7031 Weil im Schönbuch-Neuweiler(DE)**

(72) Erfinder: **Hartmann, Kurt**
**Breite Heerstrasse 33**
**D-7260 Calw-Heumaden(DE)**

(74) Vertreter: **Blutke, Klaus, Dipl.-Ing.**
**Schönaicher Strasse 220**
**D-7030 Böblingen(DE)**

(54) **Elektromagnetischer Antrieb für fortlaufende und schrittweise Linear- oder Drehbewegungen.**

(57) Der Antrieb hat ein Bewegungsglied (32A) und einen feststehenden Stator. Der Stator hat magnetische Arbeitsspalte (G1, G2, G3), durch die das Bewegungselement (32A, 32B) verläuft. Das Bewegungselement (32A), weist magnetisierbare Ankerelemente (33) auf, dessen Abmessungen in der Größenordnung der Arbeitsspalte (G1, G2, G3) liegen. Wenn einer der Arbeitsspalte (G1, G2, G3) für eine kurze Zeit aktiviert ist, wird das vor ihm befindliche Ankerelement in ihn hineingezogen. Zur Erzeugung einer Antriebsbewegung wird nach Aktivierung mindestens eines ersten Arbeitsspaltes für das Hineinziehen des entsprechenden Ankerelementes in diesen Arbeitsspalt mindestens ein zweiter Arbeitsspalt aktiviert, zum Hineinziehen eines zu diesem Zeitpunkt vor ihm befindlichen Ankerelementes in diesen Arbeitsspalt.

FIG. 1

**Elektromagnetischer Antrieb für fortlaufende und schrittweise Linear- oder Drehbewegungen**

Die Erfindung betrifft einen elektromagnetischen Antrieb
für fortlaufende und schrittweise Linear- oder Drehbewegungen der im Oberbegriff des Anspruches 1 bezeichneten
Art.

Dieser Antrieb ist im weiten Sinne mit elektromagnetischen
Linearschrittmotoren vergleichbar. Es liegt ihm jedoch
ein anderes Antriebsprinzip zugrunde, daß in der deutschen
Patentanmeldung P 29 26 276.8 (GE 979 026) der gleichen
Anmelderin beschrieben ist. Das in vorgenannter Patentanmeldung beschriebene Prinzip bezieht sich aber auf
Bewegung eines elektromagnetisch angetriebenen Stößels,
der nur einen Bewegungshub (hin und zurück) ausführen
kann.

Nach der hier vorliegenden Erfindung wird dieses Antriebsprinzip für fortlaufende wie bei Motoren übliche
Bewegungen erweitert, so daß sich eine Art Motorantrieb
für Linear- oder Drehbewegungen ergibt.

Bekannte elektromagnetische Linearschrittmotoren sind
in dem Artikel "Dimensionierung und Betriebsverhalten
reaktiver elektromagnetischer Linearschrittmotoren"
(Teil 1 und Teil 2 von Dipl.-Ing. R. Bolt Technische
Universität Dresden, Sektion Elektronik-Technologie und
Feingerätetechnik) der Zeitschrift "Feingerätetechnik",
26. Jahrgang, Heft 9, 1977, Seiten 408-411 bzw. Heft
10, 1977, Seiten 459-462 ausführlich beschrieben. Aus
diesem Artikel geht hervor, daß sich die Magnetkreise
der auf einer bzw. beiden Seiten des Läufers angeordneten Stator-Elektromagneten auf folgendem Weg schließen:

GE 983 015

0134827

Der Magnetfluß tritt aus der Polfläche eines ersten Jochschenkels des Elektromagneten in den Läufer ein und wird innerhalb des Läufers zu der Polfläche eines benachbarten zweiten Polschenkels des gleichen Elektromagneten zurückgeführt.

Eine solche Flußführung im Läufer führt zu einer hohen Läufermasse, die sich jedoch bei allen Anwendungen, bei denen es auf kurze Beschleunigungs- und Abbremszeiten ankommt, nachteilig auswirkt.

Neben linearen Schrittmotoren mit einem beidseits des Läufers angeordneten Statorelektromagneten ist in dem vorgenannten Artikel auch eine Ausführung beschrieben, bei der die Stator-Elektromagnete mittig angeordnet sind und der Läufer beidseits des Stators verläuft. Die elektromagnetische Wirkungsweise zum Antrieb dieses "Außen"-Läufers ist die gleiche wie die für den zuvor erwähnten "Innen"-Läufer.

In dem Artikel "Elektrische Antriebe in der Feingerätetechnik" (der Technischen Universität Dresden, Sektion Elektrotechnik), wiedergegeben in der Zeitschrift Feingerätetechnik, 26. Jahrgang, Heft 6, 1977, Seiten 271- 277 findet sich eine Systematik der elektrischen Antriebsmittel für kontinuierliche und diskontinuierliche Dreh- und Translationsbewegungen. Diesem Artikel ist auch das Prinzip eines elektromagnetischen linearen Schrittmotors zu entnehmen, bei dem magnetisierbare Elemente eines längsbeweglichen Läufers in das Innere von hintereinander angeordneten Magnetspulen des Stators gezogen werden. Dieses Prinzip ist mit folgenden Nachteil verbunden:

GE 983 015

Weil Stator und Läufer unterschiedliche Polteilungen haben (z.B. 5 Statorpole ≙ 4 Läuferpole), liefert zu jeder Läuferstellung immer nur ein Stator/Läufer-Polpaar maximale Vortriebskraft, obwohl mehrere Stator/Läufer-Polpaare gleichzeitig an der Führung des Magnetflusses beteiligt sind. Dadurch ist die Verlustleistung $RI^2$, die für eine vorgegebene Aktionskraft aufzuwenden ist, unnötig hoch.

Wie bereits erwähnt ist das Prinzip des elektromagnetischen Antriebes, welches auch im hier vorliegenden Anmeldungsgegenstand zugrundeliegt in der deutschen Patentanmeldung P 29 26 276.8 (GE 979 026) beschrieben.

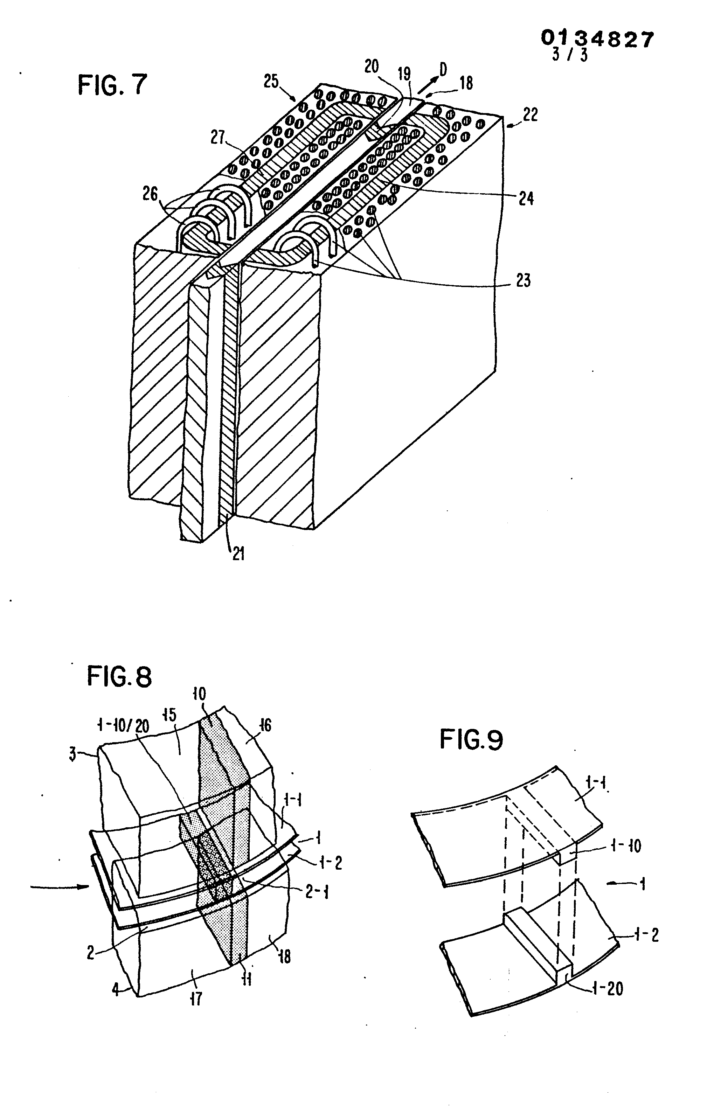

In Fig. 7 der hier vorliegenden Anmeldung ist eine schematische perspektivische Darstellung in der deutschen Patentanmeldung P 29 26 276.8 beschriebenen elektromagnetischen Druckstößeleinheit gezeigt. Zwischen zwei fest angeordneten Statorhälften 25, 22 ist eine in Richtung des Pfeiles D bewegliche Zunge 28 angeordnet. Die Statorhälften 25 und 22 bestehen jeweils aus einem magnetisierbaren Joch 27 bzw. 24, welches von Spulenwindungen 26 bzw. 23 umfaßt ist. Die Statorjoche können z.B. halbkreisförmig, halbellipsenförmig oder auch U-förmig ausgebildet sein. Die Statorjoche 27, 24 in den beiden Statorhälften 25 und 22 sind derart ausgerichtet, daß die jeweils gegenüberliegenden Jochenden fluchten. Bei Erregung der Spulen 26 und 23 verläuft der magnetische Fluß von einem Joch über einen Arbeitsspalt, in welchem ein Ankersteg 20 angeordnet ist, zum Joch der anderen Statorhälfte und von dort aus über einen weiteren Arbeitsspalt zum erstgenannten Joch zurück, so daß der magnetische Kreis aus den beiden gegenüberliegenden Statorjochen und den zwischen den Enden der Statorjoche befindlichen zwei Arbeitsspalten besteht.

GE 983 015

Der Stromfluß in den Erregerspulen 26 und 23 erfolgt derart, daß die Stromrichtung in den Windungen innerhalb der beiden einander gegenüberliegenden Statorjoche die gleiche und entgegengesetzt zu derjenigen in den Windungen außerhalb der Statorjoche ist. In Fig. 7 sind im vorderen Teil der Darstellung die Windungen schematisch durch einige Drahtschleifen angedeutet, während im hinteren Teil eine entsprechende Schnittdarstellung der Drähte gewählt wurde. Die zwischen den Statorhälften 25 und 22 in Pfeilrichtung D beweglich angeordnete Zunge 28 ist in Richtung des Arbeitsspaltes ungleich kleiner ausgedehnt als in ihren anderen beiden Dimensionen. Der Körper der Zunge 28 besteht aus einem leichten, magnetisch nicht leitenden Material 19 und magnetisch leitenden, sog. Ankerstegen 20 und 21. Diese Ankerstege sind in der Zunge 28 so angeordnet, daß sie bei Erregung der Statorhälften aus einer Ruhe-Ausgangs-Lage in den zwischen den Statorjochen gebildeten Arbeitsspalt-Raum hineingezogen und dabei beschleunigt werden. Danach kann die Zunge einer weiteren Bewegung in Pfeilrichtung D folgen. Die Ausbildung der Ankerstege 20 und 21 ist im wesentlichen so gewählt, daß sie mit ihrem Volumen den zwischen den Enden gegenüberliegender Statorjoche umschriebenen Arbeitsspalt-Raum in etwa ausfüllen würden.

Die durch die Zunge zurückgelegte Wegstrecke von der Ausgangsstellung bis zur Stellung nach Abschluß der Beschleunigungsphase (wenn sich der Ankersteg im Arbeitsspalt befindet) wird als Beschleunigungshub bezeichnet; die Summe aus Beschleunigungshub und der danach folgenden weiteren Auslenkung der Zunge in Richtung des Pfeiles D als Arbeitshub. Diese Größe ist von konstruktiven Randbedingungen abhängig sowie von den zur Lagerung der Zunge bzw. zur Rückführung der Zunge in seine Ausgangs-

GE 983 015

stellung vorgesehenen Mitteln. Als solche Mittel können an sich bekannte Rückstellmittel (nicht dargestellt) verwendet werden: z.B. zwei Blattfedern, wie in der deutschen Patentanmeldung P 12 37 816 beschrieben, eine Feder im Zusammenwirken mit einer Gleitlagerung der Zunge oder eine Rückholfeder im Zusammenwirken mit einer schwenkbar um eine Achse bewegbaren Zunge. Auch eine elektromagnetisch oder permanentmagnetisch bedingte Rückführung ist möglich.

Aus der Darstellung in Fig. 7 ist ersichtlich, daß die Spulenwindungen um die Basis der U-förmigen Jochhälften verlaufen. Mit anderen Worten, die Windungen sind innerhalb und außerhalb angeordnet. Der Aufwand zur Anbringung solcher Wicklungen sowie der damit verbundene Raumbedarf sind relativ hoch.

Zur Vermeidung dieser Nachteile kann deshalb wie in der deutschen Patentanmeldung P 31 14 834.4 (GE 980 048) beschrieben, der Elektromagnet aus zwei im wesentlichen symmetrisch aufgebauten von einer Spule umfassten magnetisierbaren E-förmigen Jochhälften bestehen. Die zueinander zugewandten Polenden der Jochhälften bilden drei einander fluchtende Arbeitsspalte. Zwischen den Arbeitsspalten ist ein in Richtung der Fluchtlinie der Arbeitsspalte verschiebbarer zungenförmiger Stößel angeordnet. Der Querschnitt des Stößels ist an die Fläche der Arbeitsspalte angepaßt. Der Stößel enthält quaderförmig ausgebildete Ankerstege aus magnetisierbarem Material. Die Ankerstege weisen eine derartige geometrische Ausbildung auf, daß ihr Volumen in der Größenordnung des Arbeitsspaltvolumens liegt. In der Ausgangslage des Stößels befinden sich die Ankerstege im nicht erregten Zustand des Elektromagneten im wesentlichen vor dessen Arbeitsspalten. Sie werden bei Erregung des Elektromagneten in dessen Arbeitsspalte hineingezogen und erfahren dabei eine Beschleunigung. Die Windungen der die Jochhälften erregenden Spulen verlaufen im wesentlichen zwischen den E-Schenkeln der Jochhälften. Die Ankerstege können durch Querverbindungen gleichen Materials wie sie selbst zu einem zusammenhängenden Stück verbunden sein. Diese Querverbindungen sind jedoch aus Gründen der Wirkungsweise des Antriebs möglich nicht in der gleichen Materialstärke wie die Ankerstege selbst bzw. nur als schmale Verbindungsstreifen zwischen den Ankerstegen ausgeführt.

Ein auf dem in der deutschen Patentanmeldung P 29 26 276.8 beschriebenen Prinzip beruhender elektromagnetischer Drehantrieb mit Nickbewegung ist in der europäischen Patentanmeldung P 82 110 213.4 (GE 982 027) beschrieben. Dieser Antrieb dient der Ausführung einer einzelnen Schrittschalt- oder Stoßbewegung und besteht aus einer Elektromagneteinheit und einem Bewegungselement. Die Elektromagneteinheit umfaßt von Elektromagnetspulen erregbare Joche. Die einander gegenüberstehenden Polenden der Joche definieren magnetische in einer Ebene liegende Arbeitsspalte. Das Bewegungsglied ist ein rotationssymmetrischer Körper und als Scheibenring oder als Scheibe aufgeführt. Es verläuft durch die magnetischen Arbeitsspalte und enthält eine Anzahl magnetisierbarer Elemente. Die geometrische Ausbildung dieser Elemente liegt in der Größenordnung der geometrischen Ausbildung der magnetischen Arbeitsspalte. Im nicht erregten Zustand der Elektromagneteinheit befindet sich ein solches Element im wesentlichen vor dem ihm zugeordneten magnetischen Arbeitsspalt. Bei Erregung der Elektromagneteinheit wird dieses Element in den Arbeitsspalt hineingezogen und dabei beschleunigt, wodurch der Antrieb des Bewegungselementes bedingt ist. Durch einen rotationssymmetrischen Aufbau der Elektromagneteinheit brauchen für

GE 983 015

sämtliche Joche nur eine einzige Erregerspule bzw. zwei Teilhälften davon vorgesehen zu sein. Bei einem Scheibenring als Bewegungsglied wird die Antriebsbewegung von einer mit seiner Peripherie verbundenen Anordnung abgeleitet, bei einer Scheibe von einer mit dieser verbundenen Achse.

Fig. 8 zeigt eine perspektivische ausschnittsweise Prinzipdarstellung eines Scheibenringes 1 mit Ankerstegen 1-10/20, von denen jeder in jeweils einem zwischen zwei Magnetjochen 10, 11 liegenden magnetischen Arbeitsspalt 2-1 hineingezogen wird. Die Anordnung besteht aus enem oberen Außenring 3 und einem unteren Außenring. 4. Die Außenringe 3 und 4 sind feststehend und voneinander zur Bildung eines Spaltes 2 voneinander entfernt. In diesem Spalt ist ein in Pfeilrichtung frei beweglicher Scheibenring 1 angeordnet. Die Bewegung des Scheibenringes erfolgt in der Ringebene um die nicht dargestellte Rotationsachse des Scheibenringes. Diese Bewegung wird durch Wechselwirkung des Magnetfeldes in dem magnetischen Arbeitsspalt 2-1 und dem magnetisierbaren Ankersteg bewirkt. Der magnetische Arbeitsspalt liegt zwischen den Polenden zweier sich gegenüberstehender Magnetjoche 10 und 11. Das eine Magnetjoch 10 ist im oberen Außenring 4 angeordnet. Die Magnetjoche werden durch eine in Fig. 8 nicht dargestellte, die Rotationsachse des Scheibenringes umschließende Zylinderspule elektromagnetisch erregt. Die Außenringe 3 und 4 sind derart strukturiert, daß die Magnetjoche in radialer Ausrichtung zwischen magnetisch nichtleitenden Außenringsegmenten angeordnet sind. Die dem Magnetjoch 10 im oberen Außenring 3 benachbarten Außenringsegmente sind mit 15 oder 16 gekennzeichnet; die dem Magnetjoch 11 benachbarten Außenringsegmente im unteren Außenring mit 17 und 18. Der Scheibenring 1 besteht aus einem radial ausgerichteten Ankersteg 1-10/20, der in etwa die Abmessungen des zwischen den Polenden der Joche 10 und 11 liegenden magnetischen Arbeitsspaltes 2-1 hat. Links und rechts dieses Ankersteges befinden sich Abschnitte aus überwiegend nichtmagnetisierbarem Material. Bei Erregung der Joche 10 und 11 und dem damit verbundenen Aufbau eines magnetischen Arbeitsspaltes zwischen ihren Polenden wird der Ankersteg 1-10/20 in diesen magnetischen Arbeitsspalt 2-1 hineingezogen und dabei beschleunigt. Diese Bewegung wird, wie später noch ausführlich beschrieben, zur Erzeugung einer Nickbewegung, wie sie z.B. auch in Anschlagdruckern zur Erzeugung eines Abdrucks verwendet werden kann, ausgenutzt. In der in Fig. 8 gezeigten Darstellung ist nur ein magnetischer Arbeitsspalt 2-1 und ein ihm zugeordneter Ankersteg 1-10/20 gezeigt. Insgesamt gesehen sind zwischen dem oberen 3 und dem unteren Außenring 4 mit einer Vielzahl von Magnetjochpaaren auch eine Vielzahl von magnetischen Arbeitsspalten gebildet, denen jeweils ein Ankersteg zugeordnet ist.

Die einzelnen Ankerstege sind im Idealfall durch nicht- magnetisierbare Scheibenringelemente voneinander ge- trennt. Es ist jedoch auch möglich, im Rahmen einer einfachen Herstellung des Scheibenringes 1 eine Struktur vorzusehen, bei der die einzelnen Ankerstege nicht durch Segmente nichtmagnetisierbaren Materials voneinander getrennt werden, sondern durch dünne, durchgehende stegverbindende Blechbrücken aus gleichem Material wie die Ankerstege miteinander verbunden werden.

In Fig. 9 ist eine schematische ausschnittweise Explosionszeichnung zur Bildung des Scheibenringes 1 aus zwei Teilhälften 1-1 und 1-2 gezeigt.

GE 983 015

Eine solche Teilhälfte besteht aus einem Teil 1-10 bzw. 1-20 zur Bildung des eigentlichen Ankersteges 1-10/20 sowie aus einem dünnen durchgehenden Scheibenringblech gleichen Materials wie der Ankersteg. Scheibenringblech und Ankerstegteil 1-10 bzw.1-20 bilden z.B. eine durch Ätzen hergestellte gemeinsame Teilhäflte 1-1 bzw. 1-2. Beide Teilhälften 1-1, 1-2 werden zur Bildung des Scheibenringes 1 miteinander verschweißt. Es hat sich herausgestellt, daß die Wirkungsweise der Anordnung im wesentlichen nicht dadurch beeinflußt wird, daß die die Ankerstegteile miteinander verbindenden Scheibenringbleche auch aus magnetisierbarem Material bestehen. Diese Bleche sind ungleich dünner als der eigentliche Ankersteg. Die Herstellung der Teilhälften 1-1 und 1-2 ist äußerst einfach und kostengünstig; außerdem hat ein dermaßen gefertigter Scheibenring 1 den Vorteil einer stoßkantenfreien Oberfläche, da es nicht erforderlich ist, die für die Bewegung des Scheibenringes zwischen den Polenden der Magnetjoche maßgebende Fläche zur Beseitigung unebener Stoßkanten plan zu schleifen.

Der Erfindung liegt die Aufgabe zugrunde, unter Vermeiddung der bei herkömmlichen elektrischen Antrieben für kontinuierliche Bewegungen auftretenden Nachteile und unter Benutzung des in der deutschen Patentanmeldung P 29 26 276.8 beschriebenen Antriebsprinzips für einen Stößel einen neuartigen elektromagnetischen Antrieb für fortlaufende Dreh- oder Linearbewegungen anzugeben.

Diese Aufgabe der Erfindung wird in vorteilhafter Weise durch die im kennzeichnenden Teil des Anspruches 1 angegebenen Maßnahmen gelöst.

Vorteilhafte Weiterbildungen der Erfindung sind den Unteransprüchen zu entnehmen.

GE 983 015

Ausführungsbeispiele der Erfindung sind in den Zeichnungen dargestellt und werden im folgenden näher beschrieben.

Es zeigen:

Fig. 1    eine schematische Darstellung des elektromagnetischen Antriebs für fortlaufende und schrittweise Linearbewegungen,

Fig. 2    eine ausschnittsweise, schematische Darstellung einer anderen Ausführungsform für das
          Bewegungsband des Antriebes gemäß Fig. 1,

Fig. 3    eine schematische, ausschnittsweise Darstellung des erfindungsgemäßen Antriebes mit einem
          Bewegungsband gemäß Fig. 2 unter Verwendung
          von Gleitblechen für die Magnetjochpaare,

Fig. 4    eine schematische, perspektivische, aus-
          schnittsweise Darstellung eines erfindungs-
          gemäßen Antriebes für Linearbewegungen, bei
          dem das bewegte Teil aus mehreren Spuren
          besteht, die jeweils eine Reihe von Ankerelementen enthalten,

Fig. 5    eine schematische Prinzipdarstellung gemäß

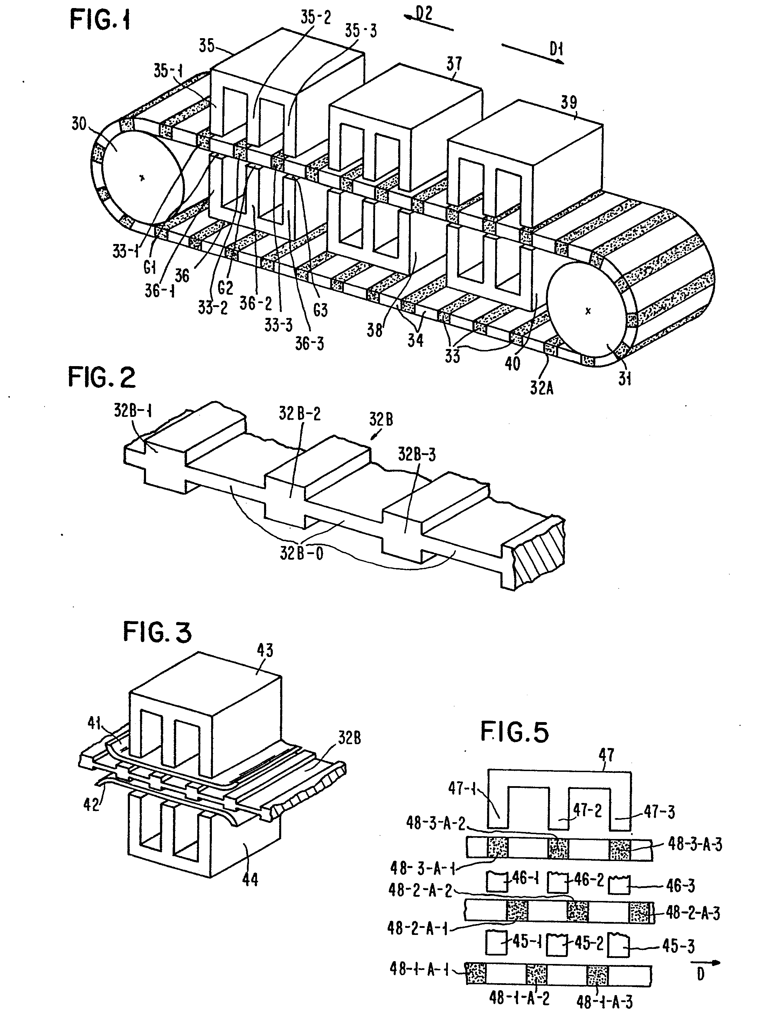

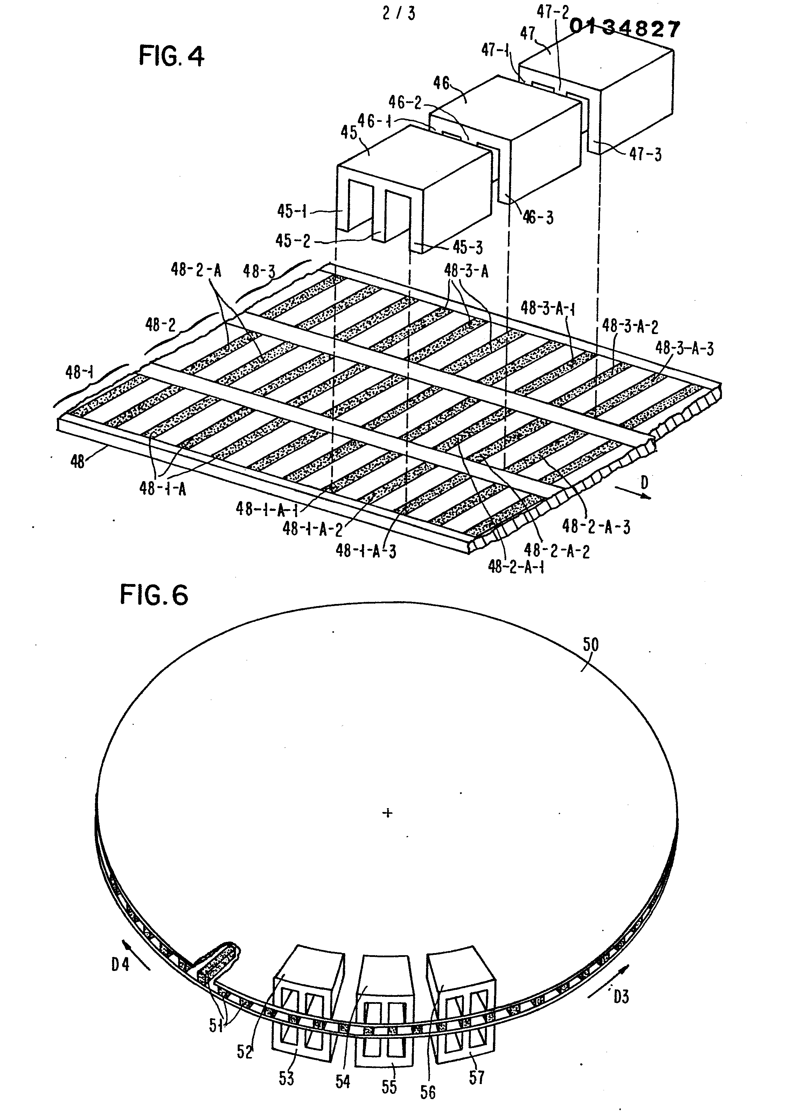

          Fig. 4 zur gegenseitigen Anordnung der Ankerelemente in den verschiedenen Spuren zu den
          Polenden der Jochschenkel der E-förmigen
          Magnetjochhälften,

Fig. 6    eine schematische, perspektivische Darstellung eines erfindungsgemäßen Antriebes für
          Drehbewegungen,

GE 983 015

Fig. 7     eine schematische perspektivische Darstellung
           zu Stand der Technik für einen elektromagne-
           tischen Druckhammerantrieb mit einer beweg-
           lichen Zunge mit Stegen aus magnetisierbarem
           Material und beidseits der Zunge liegenden
           Elektromagnetjochhälften,

Fig. 8     eine perspektivische, ausschnittsweise Prinzipdarstellung zum Stand der Technik für einen Scheibenring mit Ankerstegen, von denen jeder in jeweils einen zwischen zwei Magnetjochen liegenden
           magnetischen Arbeitsspalt hineingezogen wird.

Fig. 9     eine schematische, ausschnittsweise Explosionszeichnung zum Stand der Technik für die Bildung
           des Scheibenringes (mit Ankerstegen) aus zwei
           Teilhälften.

Fig. 1 zeigt eine schematische Darstellung des elektromagnetischen Antriebes für fortlaufende und schrittweise
Linearbewegungen.

Das Bewegungsglied ist ein endloses um die Antriebs- bzw.
Umlenkrollen 30, 31 umlaufendes Band 32A. Es enthält Ankerstege 33 aus magnetisierbarem Material, die quer zur
Bewegungsrichtung des Bandes (D1 oder D2) verlaufen. Diese Ankerstege 33 sind durch Abstandsstücke 34 aus im wesentlichen nichtmagnetisierbarem Material voneinander beabstandet. Das Bewegungsband 32A durchläuft eine Reihe
magnetischer Arbeitsspalte, die zwischen den Polenden
der Schenkel jeweils zweier gegenüberliegender jeweils
ein Paar bildender Magnetjochhälften gebildet werden.
Die Magnetjochhälften des ersten Paares sind mit 35 und
36; die Magnetjochhälften des zweiten Paares mit 37 und
38 und die des dritten Paares mit 39 und 40 bezeichnet.

Die Magnetjochpaare sind nacheinander in Bewegungsrichtung des Bandes 32A angeordnet. Sie haben eine E-förmige Struktur. Die Schenkel des der Magnetjochhälfte 35 sind mit 35-1, 35-2 und 35-3 bezeichnet. Die Schenkel der Magnetjochhälfte 36 mit 36-1, 36-2, 36-3. Zwischen den Polenden der Schenkel 35-1 und 36-1 wird der magnetische Arbeitsspalt G1; zwischen den Polenden der Schenkel 35-2 und 36-2 der magnetische Arbeitsspalt G2 und zwischen den Polenden der Schenkel 35-3 und 36-3 der magnetische Arbeitsspalt G3 gebildet. Zur Ausbildung eines magnetischen Arbeitsspaltes kommt es selbstverständlich nur dann, wenn die Magnetjochhälften entsprechend magnetisch erregt werden. Eine solche Erregung kann durch eine auf den mittleren E-Schenkel der Magnetjochhälften aufgesteckten Spule erfolgen. Aus Übersichtgründen wurde jedoch auf die Darstellung der Erregerspule verzichtet. Die Arbeitsspalte G1, G2 und G3 weisen einen Abstand auf, der dem Abstand der Ankerelemente 33 im Band 32A entspricht. Das gleiche gilt für die durch das zweite und dritte Magnetjochhälftenpaar gebildeten Arbeitsspalte. Für diese Magnetjochhälftenpaare entfällt aus Übersichtsgründen ebenfalls die Darstellung der entsprechenden Erregerspulen. Zur Erklärung der Wirkungsweise des Antriebs sei davon ausgegangen, daß sich zu einem bestimmten Zeitpunkt der Ankersteg 33-1 vor dem magnetischen Arbeitsspalt G1, der Ankersteg 33-2 vor dem magnetischen Arbeitsspalt G2 und der Ankersteg 33-3 vor dem magnetischen Arbeitsspalt G3 befindet. Wird zu diesem Zeitpunkt das Magnetjochhälftenpaar 35/36 erregt, werden durch Wirkung der magnetischen Arbeitsspalte auf die vor ihnen befindlichen Ankerelemente dieselben in die Arbeitsspalte hineingezogen und dabei beschleunigt. Dadurch bewegt sich das Band in Pfeilrichtung D1 weiter, wodurch die zu diesem Zeitpunkt im Bereich des zweiten Magnetjochhälftenpaares 37/38 befindlichen Ankerstege vor die magnetischen Arbeitsspalte gelangen. Wird zu diesem Zeitpunkt die Erregung des ersten Magnetjochhälftenpaares 35/36 unterbrochen und die Erregung des Magnetjochhälftenpaares 37/38 gestartet, werden nunmehr die vor den magnetischen Arbeitsspalten des letztgenannten Magnetjochhälftenpaares befindlichen Ankerstege in die magnetischen Arbeitsspalte hineingezogen. Dabei bewegt sich das Band 32A weiter in Bewegungsrichtung D1. Diese Bewegung wird fortgesetzt, wenn nunmehr die Erregung des Magnetjochhälftenpaares 37/38 unterbrochen und die des Magnetjochhälftenpaares 39/40 gestartet wird. Hierbei werden wiederum die vor den magnetischen Arbeitsspalten dieses Magnetjochhälftenpaares befindlichen Ankerstege in diese Arbeitsspalte hineingezogen. Die fortlaufende Bewegung des Bandes 32A ist also an die aufeinanderfolgende kurzzeitige Erregung der Magnetjochhälftenpaare gebunden. Dies setzt natürlich voraus, daß diese Magnetjochhälftenpaare zur Ankerstegteilung entsprechend versetzt angeordnet sind, so daß vor den magnetischen Arbeitsspalten immer nur eines Magnetjochhälftenpaares entsprechende Ankerstege befinden, um bei Erregung in diese Arbeitsspalte hineingezogen zu werden.

In diesem Zusammenhang sei bemerkt, daß es natürlich auch möglich ist, Magnetjochhälftenpaare vorzusehen, die gleichzeitig auf die Ankerstege des Bewegungsbandes einwirken. Die Möglichkeit, die Magnetjochhälftenpaare als Elektromagnete zu willkürlichen Zeitpunkten zu erregen läßt es zu auf die Geschwindigkeitssteuerung des Bandes Einfluß zu nehmen, insbesondere die Anlauf- bzw. Abbremsphase des Bandes zu steuern oder verschiedene Gleichlaufphasen des Bandes vorzusehen. Dafür ist zu berücksichtigen, daß die von einem magnetischen Arbeitsspalt auf einen entsprechenden Ankersteg ausgeübte Anziehungskraft vom Abstand des letzteren zum Arbeitsspalt abhängt. Ebenso ist auch zu berücksichtigen, daß auf das Band auch eine abbremsende Wirkung ausgeübt werden kann nämlich dann, wenn sich ein aus dem Arbeitsspalt entfernender Ankersteg bei einer Erregung des Arbeitsspaltes entgegen der Fortbewegungsrichtung des Bandes zum Arbeitsspalt hin eine anziehende Kraft erfährt.

Alle diese Einflüße sind bei der Erregung der Elektromagnete für bestimmte Zeitintervalle zu berücksichtigen.

Fig. 2 zeigt eine ausschnittsweise schematische Darstellung einer anderen Ausführungsform für das Bewegungsband des Antriebes gemäß Fig. 1. Das in Fig. 1 gezeigt Bewegungsband besteht aus der bloßen Hintereinanderschaltung von Ankerstegen und nicht magnetisierbaren Zwischenstücken. Diese Anordnung dient mehr dem Verständnis der prinzipiellen Wirkungsweise des Antriebes. Bei der Fertigung eines solchen Bandes ergeben sich schnell technologische Schwierigkeiten, da es schwierig ist, eine solche Struktur flexibel zu gestalten. Aus diesem Grunde ist in Fig. 2 eine Anordnung angegeben, die es ermöglicht, daß das Bewegungsband aus einem einzigen Stück hergestellt wird. Diese neue Struktur des Bewegungsbandes beruht auf der Erfahrung, daß die Wirkungsweise des Antriebes kaum nachteilig dadurch beeinflußt, wenn die einzelnen Ankerstege durch dünnere Brücken gleichen Materials wie sie selbst verbunden sind. Die Ankerstege des Bewegungsbandes 32B in Fig. 2 sind mit 32B-1, 32B-2, 32B-3, etc. gekennzeichnet. Sie werden durch Brücken 32B-0 gleichen Materials verbunden. Grundsätzlich sollten die Stege miteinander verbundenen Teile aus nicht magnetisierbarem Material sein, weil andernfalls der Wirkungsgrad des Antriebes nachteilig beeinflußt würde. Aus Herstellungsgründen kann dieser Nachteil jedoch in Kauf genommen werden, wobei man be-

GE 983 015

0134827

müht ist, diesen Nachteil sehr klein zu halten. Dazu ist es erforderlich, diese die Ankerstege verbindenden Brücken 32B-0 dünner auszuführen als die Ankerstege selbst. Hierdurch eröffnet sich die Möglichkeit das Profil des Bewegungsbandes aus einem relativ flexiblen Stahlband herauszuätzen. Die sich daraus ergebenden Stoßkanten der Ankerstege könnten beim Passieren der magnetischen Arbeitsspalte an die Kanten der Jochschenkel stoßen und auf diese Art eine antriebshemmende Wirkung ausüben.

Fig. 3 zeigt eine schematische ausschnittsweise Darstellung des erfindungsgemäßen Antriebes mit einem Bewegungsband gemäß Fig. 2 unter Verwendung von Gleitblechen für die Magnetjochpaare. Diese in Fig. 3 mit 41 und 42 bezeichneten Gleitbleche sind zwischen den Polenden der Jochschenkel und dem Bewegungsband angeordnet. In der Eintrittsstelle (sowohl für Vor- als auch Rücklauf) des Bandes in den Raum zwischen die Magnetjochhälften sind diese Gleitbleche der zur Bewegungsrichtung des Bandes leicht aufgebogen, um ein stoßfreies Hineingleiten des Bandes in den Raum zwischen die Magnetjochhälften zu ermöglichen. Diese Gleitbleche 41, 42 sollten aus magnetisierbarem Material wie z.B. Silizium-Eisen bestehen, um die Ausbildung der magnetischen Arbeitsspalte bei möglichst geringer Ampere-Windungszahl der Erregerspulen zu ermöglichen. Auch nichtmagnetisierbares Material kann Verwendung finden, sofern seine Dicke klein gegen die Abmessungen des Luftspalts ist.

Fig. 4 zeigt eine schematische perspektivische ausschnittsweise Darstellung eines erfindungsgemäßen Antriebes für Linearbewegungen, bei dem das bewegte Teil aus mehreren Spuren besteht, die jeweils eine Reihe von Ankerelementen enthalten. Diese bewegte Teil kann wie-

GE 983 015

derum ein endloses umlaufendes Band sein. In Analogie zu Linearmotoren sind auch Antriebe denkbar, bei denen dieses Bewegungsband als geradliniger Stator (bzw. Läufer) und die beidseits dieses Stators angeordneten Magnetjochhälften als Läufer (bzw. Stator) ausgeführt sind.

Für das in Fig. 4 gezeigte Ausführungsbeispiel weist das Bewegungsband 48 drei Spuren 48-1, 48-2, 48-3 auf. In jeder Spur sind äquividistant Ankerstege 48-1-A (für die Spur 48-1), 48-2-A (für die Spur 48-2) und 48-3-A (für die Spur 48-3) angeordnet. Die Ankerstege der einen Spur sind gegen die der anderen versetzt. Jeder Spur ist ein Magnetjochhälftenpaar zugeordnet, von denen jeweils nur die obere Magnetjochhälfte gezeigt ist. Die Magnetjochhälfte 45 bezieht sich auf die Spur 48-1, die Magnetjochhälfte 46 auf die Spur 48-2 und die Magnetjochhälfte 47 auf die Spur 48-3. Die einzelnen Magnetjochhälften sind quer zu den Spuren aufeinander ausgerichtet, (was auch der Grund dafür ist, daß die Ankerstege der einen Spur gegen die der anderen Spur gegeneinander versetzt sind; anderenfalls, d.h. bei nicht versetzten Ankerstegen müßten die Magnetjochhälften der einzelnen Spuren gegeneinander versetzt sein). In der Darstellung nach Fig. 4 befinden sich die Ankerstege 48-1-A-1, 48-1-A-2 und 48-1-A-3 der Spur 48-1 unmittelbar vor den magnetischen Arbeitsspalten, die nach oben hin durch die Polenden der Jochschenkel 45-1, 45-2 und 45-3 der Magnetjochhälfte 45 gebildet werden. Bei Erregung des Magnetjochhälftenpaares dessen obere Magnet jochhälfte mit 45 gekennzeichnet ist, werden diese Ankerstege in die magnetischen Arbeitsspalte hineingezogen, wobei sich das Band bewegt. Durch eine Weiterbewegung des Bandes gelangen die magnetischen Ankerstege 48-2-A-1, 48-2-A-2 und 48-2-A-3 unmittelbar vor die magnetischen Arbeitsspalte, die zwischen den Polenden der Jochschenkel 46-1, 46-2, 46-3 der Magnetjochhälfte 46 und der dazugehörigen nicht dargestellten unteren Magnetjochhälfte gebildet werden. Nach Abschalten der Erregung des ersten Magnetjochhälftenpaares und Zuschalten der Erregung des zweiten Magnetjochhälftenpaares werden nunmehr diese Ankerstege in die entsprechenden magnetischen Arbeitsspalte gezogen, wobei sich das Band weiter bewegt. Dabei wiederum gelangen die Ankerstege 48-3-A-1, 48-3-A-2 und 48-3-A-3 vor die entsprechenden Arbeitsspalte des dritten Magnetjochhälftenpaares von denen nur die obere Magnetjochhälfte 47 gezeigt ist, werden bei Erregung dieser Magnetjochhälfte in die entsprechenden Arbeitsspalte hineingezogen usw. bis die Erregung wieder beim ersten Magnetjochhälftenpaar einsetzt. In Erweiterung dieser Ausführungsform ist es denkbar, daß einer Spur auch mehrere Magnetjochhälftenpaare zugeordnet werden, wobei auch Magnetjochhälftenpaare unterschiedlicher Spuren zu gleichen Zeitpunkten erregt werden können.

Fig. 5 zeigt eine schematische Prinzipdarstellung gemäß Fig. 4 zur gegenseitigen Anordnung der Ankerelemente in den verschiedenen Spuren zu den Polenden der Jochschenkel der E-förmigen Magnetjochhälften. Aus Gründen der Vereinfachung sind jeweils nur die Polenden der Jochschenkel der oberen Magnetjochhälften gezeigt. Unmittelbar vor den magnetischen Arbeitsspalten, deren obere Begrenzung durch die Polschenkel 45-1, 45-2 und 45-3 gebildet wird, befinden sich die Ankerstege 48-1-A-1, 48-1-A-2 und 48-1-A-3. Zum gleichen Zeitpunkt befinden sich die Ankerstege 48-2-A-1, 48-2-A-2 und 48-2-A-3 bereits hinter dem durch die Polschenkel 46-1, 46-2 und 46-3 markierten Arbeitsspalten. Während sich die Ankerstege 48-3-A-1, 48-3-A-2 und 48-3-A-3 der Spur 48-3 direkt in den durch 47-1, 47-2 und 47-3 markierten Arbeitsspalten befinden. Aus dieser Prinzipskizze ist leicht ersichtlich, daß bei einer Er-

regung des Magnetjochhälftenpaares mit der oberen Magnetjochhälfte 45 die vor ihren magnetischen Arbeitsspalten liegenden Ankerstege in die Arbeitsspalte hineingezogen werden, wobei es zu einer Bandbewegung in Richtung D kommt. Durch die Bandbewegung bewegen sich jedoch die Ankerstege der zweiten Spur 48-2 entsprechend weiter, so daß diese bei einer kurzzeitigen Erregung des Magnetjochhälftenpaares mit der oberen Magnetjochhälfte 46 in deren Arbeitsspalte hineingezogen werden. Dadurch kommt es zu einer weiteren Fortbewegung des Bandes in Richtung D, wobei sich die Ankerstege der dritten Spur 48-3 inzwischen so weit bewegt haben, daß sie nunmehr unmittelbar vor den Arbeitsspalten des Magnetjochhälftenpaares mit der Magnetjochhälfte 47 stehen (z.B. der Ankersteg 48-3-A-2 steht vor dem durch den Jochschenkel 47-2 nach oben begrenzten Arbeitsspalt. Die Bandbewegung wird dadurch fortgesetzt, daß nunmehr das Magnetjochhälftenpaar mit der oberen Magnetjochhälfte 47 kurzzeitig erregt wird, wobei die vor seinen magnetischen Arbeitsspalten stehenden Ankerstege in diese hineingezogen werden.

Fig. 6 zeigt eine schematische perspektivische Darstellung eines erfindungsgemäßen Antriebes für Drehbewegungen. Das Bewegungsglied ist eine Scheibe, die sich in Richtung D3 oder entgegengesetzt dazu in Richtung D4 um eine Achse bewegen kann. An ihrem äußeren Umfang weist diese Scheibe radial ausgerichtete Ankerstege auf und eine Reihe von Magnetjochhälftenpaaren. In Analogie zu der Darstellung nach Fig. 1 werden zwischen den Polenden der Jochschenkel der E-förmigen Magnetjochhälften magnetische Arbeitsspalte gebildet, wenn die zu den Magnetjochhälften gehörenden (aus Vereinfachungsgründen nicht dargestellten Erregerspulen) erregt werden. Die Anordnung der Ankerstege der Rotorscheibe ist gleichmäßig, ihre Teilung entspricht dem Abstand der Arbeitsspalte der Magnethälften. Die einzelnen

GE 983 015

Magnethälften sind in Analogie zur Darstellung nach Fig. 1 in Drehrichtung der Scheibe versetzt zur Teilung der Ankerstege angeordnet. Der Antrieb der Kreisscheibe erfolgt durch aufeinanderfolgende Erregung der Magnetjochhälftenpaare 52/53; 54/55 und 56/57 in Analogie zu der in Fig. 1 gezeigten Darstellung. Es wurde bereits einleitend darauf hingewiesen, daß es möglich ist die Kreisscheibe gemäß Fig. 9 stoßkantenfrei auszuführen.

Des weiteren sei bemerkt, daß es möglich ist den erfindungsgemäßen Antrieb in Analogie zu Schrittmotoren sowohl für schrittweise als auch für kontinuierlich fortlaufende Bewegungen einzusetzen.

Bei einer schrittweisen Fortbewegung kann ein Festhalten des Bewegungsgliedes durch einen Dauer-Haltestrom (für die Dauer des Festhaltens) erreicht werden, der kleiner als der Strom für eine Schrittbewegung sein kann. Der Haltestrom braucht nur in dem Magnetjochpaar zu fließen, in dessen Arbeitsspalten die Ankerelemente ausgerichtet sind.

P A T E N T A N S P R Ü C H E

1. Elektromagnetischer Antrieb für fortlaufende und schrittweise Linear- oder Drehbewegungen mit einem Bewegungsglied und einem feststehenden Stator, dadurch gekennzeichnet,

daß in an sich bekannter Weise der Stator magnetische Arbeitsspalte (G1, G2, G3) aufweist, durch die das Bewegungsglied (32A, 32B) verläuft und

daß das Bewegungsglied magnetisierbare Ankerelemente (33) aufweist, deren Abmessungen in der Größenordnung der Abmessungen der Arbeitsspalte liegt und

daß bei kurzzeitiger Aktivierung eines Arbeitsspaltes (z.B. G1) das vor diesem befindliche Ankerelement (z.B. 33-1) in den Arbeitsspalt hineingezogen wird;

daß zur Erzeugung einer Antriebsbewegung nach Aktivierung mindestens eines ersten Arbeitsspaltes für das Hineinziehen des entsprechenden Ankerelementes in diesen Arbeitsspalt,

mindestens ein zweiter Arbeitsspalt aktiviert wird zum Hineinziehen eines zu diesem Zeitpunkt vor ihm befindlichen Ankerelementes in diesen Arbeitsspalt.

2. Anordnung nach Anspruch 1, dadurch gekennzeichnet, daß die Arbeitsspalte zwischen den Polenden der Schenkel jeweils zweier gegenüberliegender jeweils ein Paar bildender Magnetjochhälften gebildet werden,

daß mehrere Magnetjochhälftenpaare (35/36, 37/38, 39/40) derart hintereinander in Richtung der Antriebsbewegung des Bewegungsgliedes (32A) angeordnet sind,
daß bei zeitlich aufeinander abgestimmter Erregung
der Magnetjochhälftenpaare zu einem bestimmten Zeitpunkt jeweils nur ein Magnetjochhälftenpaar bzw. nur
ein Teil aller Magnetjochhälftenpaare zur Antriebsbewegung beiträgt.

3. Anordnung nach Anspruch 1,
dadurch gekennzeichnet,
daß die Arbeitsspalte zwischen den Polenden der Schenkel jeweils zweier sich gegenüberliegender jeweils ein
Paar bildender Magnetjochhälften gebildet werden,

daß Magnetjochhälftenpaare quer zur Antriebsrichtung
des Bewegungsgliedes gegeneinander versetzt angeordnet sind,

daß das Bewegungsglied mehrere gegeneinander versetzt
angeordnete Spuren (48-1, 48-2, 48-3) von Ankerelementen enthält,

denen (48-1, 48-2, 48-3) jeweils mindestens ein Magnetjochhälftenpaar zugeordnet ist,

daß bei zeitlich aufeinander abgestimmmter Erregung
der Magnetjochpaare jeweils nur ein Paar oder ein
Teil aller Magnetjochpaare zur Antriebsbewegung beiträgt.

4. Anordnung nach Anspruch 2 oder 3,
dadurch gekennzeichnet,
daß das Bewegungsglied ein endloses umlaufendes Band
(32A, 32B, 48), eine Scheibe (50) oder ein Scheibenring ist.

5. Anordnung nach Anspruch 4,
   dadurch gekennzeichnet,
   daß die Ankerstege (32B-1, 32B-2, 32B-3) des Bewegungsgliedes (32B) durch Brückenverbindungen (32B-0) gleichen Materials wie sie selbst verbunden sind und daß die Brückenverbindungen eine geringere Dicke aufweisen als die Ankerstege.

6. Anordnung nach den Ansprüchen 2 bis 5,
   dadurch gekennzeichnet,
   daß zwischen dem Bewegungsglied (32B) und den Magnetjochhälften (43/44) Gleitbleche (41, 42) vorgesehen sind, um ein ungehindertes Passieren des mit Stoßkanten behafteten Bewegungsgliedes durch die Arbeitsspalte der Magnetjochhälftenpaare zu gewährleisten.

GE 983 015

FIG.1

FIG.2

FIG.3

FIG.5

0134827

1/3

IBM-GE 983 015

0134827

FIG. 4

FIG. 6

**FIG. 7**

**FIG.8**

**FIG.9**

IBM-GE 983015

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 392 293 (DE BOO et al.) <br> * Spalte 1, Zeile 48 - Spalte 5, Zeile 49; Spalte 7, Zeilen 21-65; Figuren 1-5 * <br><br> --- | 1,2,4 | H 02 K 41/03 <br> H 02 K 37/00 |
| X | FR-A-2 154 853 (TELEMECANIQUE ELECTRIQUE) <br> * Seite 2, Zeile 38 - Seite 5, Zeile 13; Seite 5, Zeile 34 - Seite 7, Zeile 17; Seite 9, Zeilen 2-21; Seite 10, Zeilen 4-15; Figuren 1-3,8-11 * <br><br> --- | 1,2,5,6 | |
| X | FR-A-2 121 040 (FUJITSU) <br><br> * Seite 1, Zeilen 1-10; Seite 3, Zeilen 8-12; Seite 3, Zeile 31 - Seite 4, Zeile 23; Figuren 2,8,9 * <br><br> --- | 1,2,4,5 | **RECHERCHIERTE SACHGEBIETE (Int. Cl. ³)** |
| X | US-A-3 509 390 (LOUGHLIN et al.) <br> * Spalte 3, Zeilen 5-37, 45-75; Spalte 4, Zeilen 1-55; Spalte 5, Zeilen 55-75; Spalte 6, Zeilen 1-34; Figuren 1-6,9-11 * | 1,4,5 | H 02 K |
| Y | --- -/- | 3 | |

Der vorliegende Recherchenbericht wurde für alle Patentansprüche erstellt.

| Recherchenort <br> DEN HAAG | Abschlußdatum der Recherche <br> 02-05-1984 | Prüfer <br> TIO K.H. |
|---|---|---|

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | SOVIET INVENTIONS ILLUSTRATED DERWENT, Woche C09, 09-04-1980, London, GB. & SU - A - 668 048 (MALYSHEV et al.) * Zusammenfassung; Figur * | 3 | |
| D,A | EP-A-0 063 233 (IBM) * Seiten 14,15; Figur 4 * | 1 | |
| A | US-A-3 867 676 (CHAI et al.) * Spalte 11, Zeile 46 - Spalte 14, Zeile 23; Figuren 1,2,6a-7f * | 1 | |
| A | DE-C- 364 935 (GÖBEL) * Seite 1, Zeilen 1-12; Figur * | 4 | |
| A | DE-A-2 219 354 (COATS) * Seite 18, Zeile 17 - Seite 19, Zeile 10; Figuren 1-5 * | 4,6 | RECHERCHIERTE SACHGEBIETE (Int. Cl. ³) |

-----

Der vorliegende Recherchenbericht wurde für alle Patentansprüche erstellt.

| Recherchenort DEN HAAG | Abschlußdatum der Recherche 02-05-1984 | Prüfer TIO K.H. |
|---|---|---|